# EUROPEAN PATENT APPLICATION

(11) **EP 4 645 534 A1**
(43) Date of publication of application: **05.11.2025**
(21) Application number: 25165969.4
(22) Date of filing: 25.03.2025
(51) Int. Cl.: H01M 50/103, H01M 50/528, H01M 50/531, H01M 50/627, H01M 50/60, H01M 50/682, H01M 50/593

(54) **NONAQUEOUS ELECTROLYTIC SOLUTION SECONDARY BATTERY**

(30) Priority: 25.04.2024 JP 2024071786
(71) Applicant: Prime Planet Energy & Solutions, Inc., Chuo-ku, Tokyo 103-0022 (JP)
(72) Inventor: YONEYAMA, Akihiro, Tokyo 103-0022 (JP); IMANISHI, Hiroaki, Tokyo 103-0022 (JP)
(74) Representative: Kuhnen & Wacker Patent- und Rechtsanwaltsbüro PartG mbB

(57) **Abstract**

A herein disclosed secondary battery 1 includes a case main body 10, a sealing plate 20, an electrode body 30, an electrolytic solution, and a spacer 40. This spacer 40 includes a pair of first wall parts 41 that are configured to be along first side surfaces 14a, 14b of the case main body 10, and includes a partition part 43 that is configured to extend along an opposed direction (a third direction Z) of the first side surfaces 14a, 14b so as to be disposed between the electrode body 30 and the sealing plate 20. Then, in this secondary battery 1, a liquid injection hole 22 and the partition part 43 are opposed while keeping a constant space between them, and a diffusion member 44 configured to diffuse the electrolytic solution, which is injected from the liquid injection hole 22, along the partition part 43 is provided on the partition part 43. In accordance with such a configuration, it is possible to supply the electrolytic solution to a wide range along the third direction Z, and thus it is possible to shorten a time required to osmose the electrolytic solution uniformly to an inside of the electrode body.

## Description

### BACKGROUND

### 1. Technical Field

A technique disclosed herein relates to a nonaqueous electrolytic solution secondary battery.

### 2. Description of the Related Art

The nonaqueous electrolytic solution secondary battery (below, simply referred to as "secondary battery", too) includes, for example, an electrode body, an electrolytic solution, and a battery case configured to accommodate the electrode body and the electrolytic solution. On this battery case, an opening (a liquid injection hole) is formed for injecting the electrolytic solution into it. Then, the electrolytic solution injected into the battery case osmoses to an inside (between a positive electrode plate and a negative electrode plate) of the electrode body. For this liquid injection, if the electrolytic solution is directly injected to the electrode body, there is a fear that the electrode body is damaged. Thus, between the liquid injection hole and the electrode body, a partition member (a liquid receiving part) might be arranged. By doing this, a flowing power of the injected electrolytic solution liquid is decreased, and thus it is possible to inhibit the damage on the electrode body. Examples of the secondary battery including the liquid receiving part as described above are disclosed in JP2023-92256 and JP2019-129129.

### SUMMARY

Anyway, a manufacturing site of the secondary battery, a technique of osmosing the electrolytic solution uniformly to the inside of the electrode body for a short time is required. In particular, regarding the liquid injection of the electrolytic solution, it becomes easier to supply the electrolytic solution at a position closer to the liquid injection hole but it becomes more difficult to supply the electrolytic solution at a position far from the liquid injection hole. Thus, it is required to secure a very long holding time after the liquid injection so as to implement sufficient osmosis of the electrolytic solution even at the position far from the liquid injection hole.

The herein disclosed technique has been made in view of the above-described circumstances, and the object is to shorten the time required to uniformly osmose the electrolytic solution to the inside of the electrode body.

A herein disclosed nonaqueous electrolytic solution secondary battery includes a case main body that is a square cylindrical shape having a pair of openings at both ends, a pair of sealing plates that are configured to cover the pair of openings so as to construct a battery case, an electrode body that is accommodated at an inside of the battery case, an electrolytic solution that is accommodated at the inside of the battery case, and a spacer that is arranged in at least one of spaces between the sealing plate and the electrode body. This case main body includes a pair of first side surfaces that are rectangular plate-shaped portions being opposed mutually, and a pair of second side surfaces that are configured to respectively extend from an edge of one of the first side surfaces to an edge of the other one of the first side surfaces and that are rectangular plate-shaped portions being opposed mutually. In addition, at least one of the pair of sealing plates includes a liquid injection hole that is configured to penetrate the sealing plate, and a sealing plug that is configured to seal the liquid injection hole. In addition, the spacer includes a pair of first wall parts that are respectively along at least a part of the pair of first side surfaces of the case main body, a pair of second wall parts that are respectively along at least a part of the pair of second side surfaces of the case main body, and a partition part that is a plate-shaped member configured to extend along an opposed direction of the pair of first side surfaces so as to be disposed between the electrode body and the sealing plate and that is supported by the first wall parts and the second wall parts. Then, in the herein disclosed secondary battery, the liquid injection hole and the partition part are spaced away by a constant space so as to be opposed to each other, and a diffusion member configured to diffuse the electrolytic solution, injected from the liquid injection hole, along the partition part is provided on the partition part.

As described above, the case main body of the secondary battery includes the pair of first side surfaces configured to be opposed mutually. In addition, the spacer includes the partition part that is configured to extend along an opposed direction of the first side surfaces. Then, on the spacer of the herein disclosed secondary battery, the diffusion member configured to diffuse the electrolytic solution is provided. Then, the electrolytic solution coming into contact with the diffusion member is diffused along the partition part. By doing this, it is possible to supply the electrolytic solution to a wide range along the opposed direction of the case main body, and thus it is possible to shorten a time required to make the electrolytic solution uniformly osmose to the inside of the electrode body.

### BRIEF DESCRIPTION OF THE DRAWINGS

FIG. 1 is a perspective view that schematically shows a secondary battery in accordance with one embodiment.
FIG. 2 is a perspective view in which the secondary battery in accordance with one embodiment is viewed from a view point different from FIG. 1.
FIG. 3 is a cross section view that schematically shows an inside structure of the secondary battery of FIG. 1.
FIG. 4 is an enlarged cross section view that is for explaining a liquid injection of an electrolytic solution in the secondary battery according to one embodiment.
FIG. 5 is a perspective view that schematically shows an electrode body of the secondary battery in accordance with one embodiment.
FIG. 6 is a perspective view that schematically shows a spacer of the secondary battery in accordance with one embodiment.
FIG. 7 is an enlarged cross section view that is for explaining the liquid injection of the electrolytic solution in the secondary battery according to another embodiment.
FIG. 8 is an enlarged cross section view that is for explaining the liquid injection of the electrolytic solution in the secondary battery according to another embodiment.

### DETAILED DESCRIPTION

Below, some embodiments of the herein disclosed technique will be described in detail by reference to the accompanying drawings. Incidentally, the matters other than matters particularly mentioned in this specification, and required for practicing a herein disclosed technique (for example, a general configuration and a manufacture process of a secondary battery) can be grasped as design matters of those skilled in the art based on the related art in the present field. The herein disclosed technique can be executed based on the contents disclosed in the present specification, and the technical common sense in the present field. Additionally, in the following accompanying drawings, the members/parts providing the same effect are provided with the same numerals and signs and explained.

### <First embodiment>

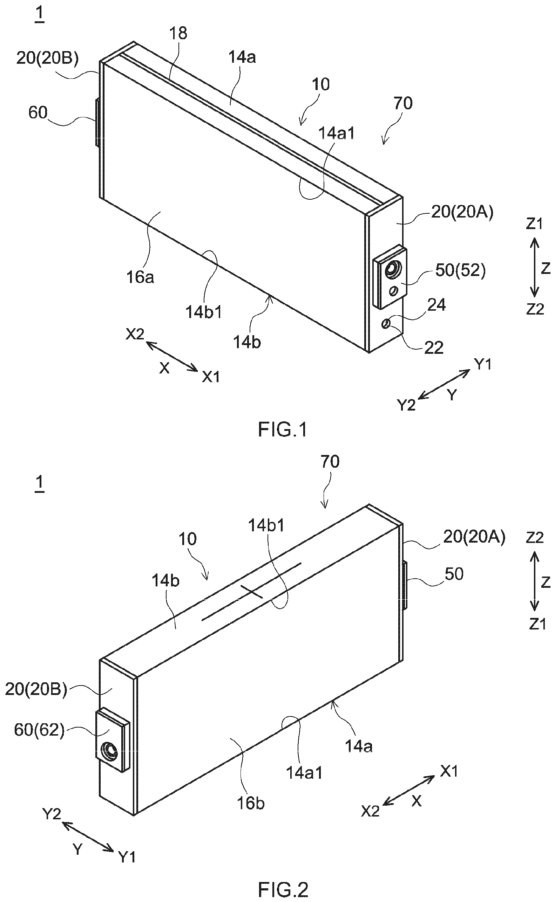

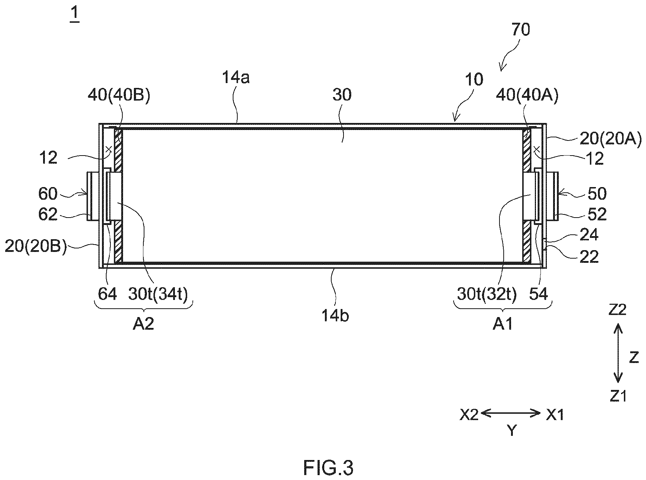

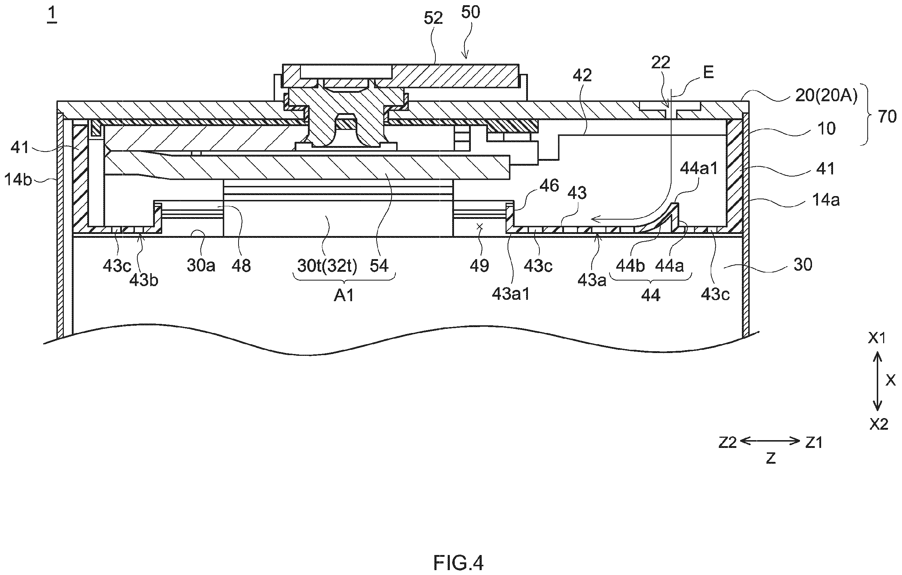

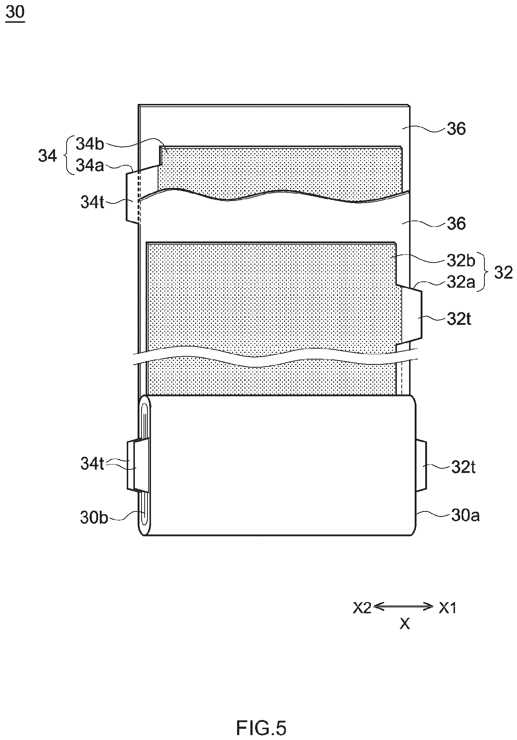

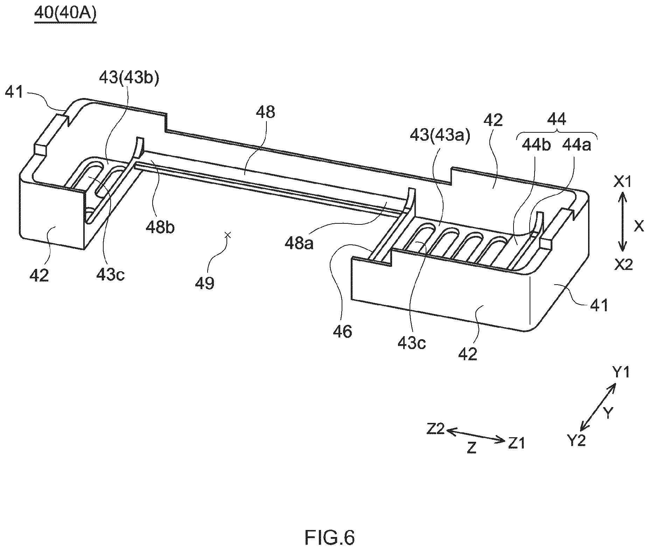

Below, one embodiment of a herein disclosed nonaqueous electrolytic solution secondary battery will be described. FIG. 1 is a perspective view that schematically shows the secondary battery in accordance with the present embodiment. FIG. 2 is a perspective view in which the secondary battery in accordance with the present embodiment is viewed from a view point different from FIG. 1. FIG. 3 is a cross section view that schematically shows an inside structure of the secondary battery of FIG. 1. FIG. 4 is an enlarged cross section view that is for explaining a liquid injection of an electrolytic solution in the secondary battery according to the present embodiment. FIG. 5 is a perspective view that schematically shows an electrode body of the secondary battery in accordance with the present embodiment. FIG. 6 is a perspective view that schematically shows a spacer of the secondary battery in accordance with the present embodiment. Incidentally, in the present specification, reference signs X, Y, and Z of drawings are respectively referred to as a first direction, a second direction, and a third direction. However, these directions are defined for convenience sake of explanation, and thus are not intended to restrict a disposed aspect of the secondary battery.

As shown in FIG. 1 to FIG. 4, the secondary battery 1 in accordance with the present embodiment includes a case main body 10, a sealing plate 20, an electrode body 30, an electrolytic solution (illustrations are omitted), and a spacer 40. Below, each of configurations will be described.

### (1) Case main body

The case main body 10 is a square cylindrical member that includes a pair of opening parts 12 at both ends in the first direction X (see FIG. 3). This case main body 10 includes a pair of first side surfaces 14a, 14b and a pair of second side surfaces 16a, 16b. The first side surfaces 14a, 14b are a pair of plate-shaped portions configured to be opposed mutually in the third direction Z. Then, each of the first side surfaces 14a, 14b is configured to extend along the first direction X. Incidentally, in the present specification, a direction in which the pair of first side surfaces 14a, 14b are opposed (in other words, the third direction Z in drawings) is referred to as "opposed direction of the first side surfaces", too. On the other hand, as shown in FIG. 1 and FIG. 2, each of the second side surfaces 16a, 16b is a rectangular plate-shaped portion that is configured to extend from a border 14a1 of one first side surface 14a to a border 14b1 of the other first side surface 14b. Then, the second side surfaces 16a, 16b are configured to be opposed mutually in the second direction Y. In addition, the second side surfaces 16a, 16b are also configured to extend along the first direction X. This case main body 10 can be manufactured by folding and bending one metal plate so as to make it be formed in a cylindrical shape, and by joining (for example, welding and joining) a seam. Thus, regarding the case main body 10 shown by FIG. 1, a welded and joined part 18 configured to extend along the first direction X is formed on the first side surface 14a at one Z1 in the third direction Z. Incidentally, it is suitable that a material of the case main body 10 is a metal material, such as aluminum, aluminum alloy, iron, and iron alloy.

### (2) Sealing plate

The sealing plate 20 is a pair of plate-shaped members configured to cover a pair of opening parts 12 of the case main body 10. In the present embodiment, the opening parts 12 of the case main body 10 are sealed by the sealing plates 20 so as to construct a battery case 70. Then, the sealing plates 20 are configured to be mutually opposed in the first direction X. In explanations described below, the sealing plate 20 at one X1 in the first direction X is referred to as a first sealing plate 20A and the sealing plate 20 at the other one X2 in the first direction X is referred to as a second sealing plate 20B. Incidentally, it is suitable that a material of each sealing plate 20 is a metal material (aluminum, aluminum alloy, iron, iron alloy, or the like) which is the same kind as the case main body 10.

At least one (the first sealing plate 20A in FIG. 1) of the pair of sealing plates 20 includes a liquid injection hole 22 and a sealing plug 24. As shown in FIG. 3 and FIG. 4, the liquid injection hole 22 is an opening part that is configured to penetrate the first sealing plate 20A. In the manufacture of the secondary battery 1, the electrolytic solution is injected to an inside of the battery case 70 through this liquid injection hole 22. Incidentally, as shown by FIG. 4, in the present embodiment, the injection of the electrolytic solution is performed in a state where the secondary battery 1 is disposed to make the first sealing plate 20A including the liquid injection hole 22 be arranged at an upward in a gravity direction. Thus, the electrolytic solution after the liquid injection falls by the gravity from one X1 to the other X2 in the first direction X. By doing this, the electrolytic solution is supplied to the electrode body 30 inside the battery case 70. Then, the liquid injection hole 22 is sealed by the sealing plug 24, after the liquid injection of the electrolytic solution is performed. By doing this, it is possible to inhibit a leakage of the electrolytic solution. Incidentally, in the present embodiment, a positive electrode terminal 50 is provided at a central part in the opposed direction (the third direction Z) of 12a, 12b of the first side surface of the case main body 10. In order to avoid an interference with this positive electrode terminal 50, the liquid injection hole 22 in the present embodiment is formed at one (the other one Z2 in the third direction Z) of end parts of the first sealing plate 20A in the opposed direction.

As shown in FIG. 1 and FIG. 2, the positive electrode terminal 50 is attached to the first sealing plate 20A. As described above, the positive electrode terminal 50 is provided at the central part in the opposed direction (the third direction Z) of 12a, 12b of the first side surface of the case main body 10. This positive electrode terminal 50 includes a positive electrode outside terminal 52 and a positive electrode inside terminal 54. As shown in FIG. 4, the positive electrode outside terminal 52 is configured to penetrate the first sealing plate 20A so as to be exposed to an outside of the battery case 70. The positive electrode inside terminal 54 is accommodated at the inside of the battery case 70. This positive electrode inside terminal 54 is connected to an electrode tab 30t (a positive electrode tab 32t) of the electrode body 30. Incidentally, in the present specification, parts configured to form an electrically conductive pathway from the electrode body 30 inside the battery case 70 to an outside terminal (a positive electrode outside terminal 52) outside the battery case 70 are all together referred to as "inside electrically conductive member". Regarding the secondary battery 1 in accordance with the present embodiment, an inside electrically conductive member A1 at the positive electrode side is configured with the positive electrode inside terminal 54 and the positive electrode tab 32t.

On the other hand, a negative electrode terminal 60 is attached to the second sealing plate 20B. As shown in FIG. 3, the negative electrode terminal 60 is also provided at the central part in the opposed direction (the third direction Z). In addition, the negative electrode terminal 60 includes a negative electrode outside terminal 62 and a negative electrode inside terminal 64. The negative electrode outside terminal 62 is configured to penetrate the second sealing plate 20B so as to be exposed to the outside of the battery case 70. In addition, the negative electrode inside terminal 64 is accommodated at the inside of the battery case 70. This negative electrode inside terminal 64 is connected to a negative electrode tab 34t of the electrode body 30. An inside electrically conductive member A2 at the negative electrode side is configured with the negative electrode inside terminal 64 and the negative electrode tab 34t.

### (3) Electrode body

The electrode body 30 is a power generating element of the secondary battery 1. As shown in FIG. 3, the electrode body 30 is accommodated at the inside of the battery case 70. In particular, the electrode body 30 is arranged at the central part in the first direction X to position between the pair of sealing plates 20. In addition, the electrode body 30 of the present embodiment includes a positive electrode 32 formed in a sheet shape, a negative electrode 34 formed in a sheet shape, and a separator 36 (see FIG. 5). This positive electrode 32 includes a positive electrode substrate 32a that is an electrically conductive metal foil, and includes a positive electrode active material layer 32b that is imparted on a surface of the positive electrode substrate 32a. In addition, on a side edge part at one X1 in the first direction X of the positive electrode 32, the positive electrode tab 32t in which the positive electrode substrate 32a is exposed is provided. On the other hand, the negative electrode 34 is an electrode that is opposed to the positive electrode 32. This negative electrode 34 includes a negative electrode substrate 34a that is an electrically conductive metal foil, and includes a negative electrode active material layer 34b that is imparted on a surface of the negative electrode substrate 34a. In addition, on a side edge part at the other X2 in the first direction X of the negative electrode 34, the negative electrode tab 34t in which the negative electrode substrate 34a is exposed is provided. In addition, the separator 36 is a sheet having an insulating property and being disposed between the positive electrode 32 and the negative electrode 34. Incidentally, as a material used for each member of the electrode body 30, it is possible without particular restriction to use a conventionally known material that can be used for a general secondary battery.

Incidentally, the electrode body 30 in accordance with the present embodiment is a wound electrode body. This wound electrode body 30 is formed by winding a laminate body in which the positive electrode 32, the negative electrode 34, and the separator 36 are laminated. On both side surfaces in the first direction X of this wound electrode body 30, osmosis areas 30a, 30b are formed in which an electrode gap between the positive electrode 32 and the negative electrode 34 (the inside of the electrode body 30) is exposed to the outside. In particular, a first osmosis area 30a is formed on a side surface at one X1 in the first direction X of the electrode body 30. In addition, a second osmosis area 30b is formed on a side surface at the other X2 in the first direction X of the electrode body 30. The electrolytic solution injected into the battery case 70 osmoses to the inside of the electrode body 30 through these osmosis areas 30a, 30b. Then, as shown in FIG. 4, the electrode body 30 of the present embodiment is accommodated at the inside of the battery case 70 so as to make the first osmosis area 30a and the liquid injection hole 22 be opposed to each other. By doing this, it becomes easy to make the electrolytic solution injected from the liquid injection hole 22 osmose to the inside of the electrode body 30. On the other hand, the osmosis areas 30a, 30b have strengths being lower than the other portions of the electrode body 30, because the positive electrode 32, the negative electrode 34, and the end part are exposed to the outside. Thus, if the first osmosis area 30a and the liquid injection hole 22 are configured to be directly opposed to each other, there is a fear that a liquid pressure at the liquid injection time causes a deformation of the electrode body 30. With respect to this, in the secondary battery according to the present embodiment 1, a partition part 43 of a later described first spacer 40A is disposed between the osmosis area 30a of the electrode body 30 and the liquid injection hole 22 of the first sealing plate 20A. By doing this, it is possible to inhibit a deformation of the electrode body 30 caused by a water pressure at the liquid injection time.

### (4) Electrolytic solution

As the illustration is omitted, the electrolytic solution is accommodated at the inside of the battery case 70. As a component of the electrolytic solution, it is possible without particular restriction to use one capable of being used for the general secondary battery. As described above, the electrolytic solution osmoses to the inside of the electrode body 30 through the osmosis areas 30a, 30b of the wound electrode body 30. Incidentally, a part of the electrolytic solution might be present at the outside of the electrode body (between the electrode body 30 and the battery case 70) as an excess electrolytic solution. By doing this, it is possible to replenish the electrolytic solution to the inside of the electrode body 30 when the electrolytic solution is short at the inside of the electrode body 30 because of a decomposition of the electrolytic solution.

### (5) Spacer

The spacer 40 is arranged in at least one of spaces between the sealing plate 20 and the electrode body 30. As shown by FIG. 3, in the secondary battery 1 according to the present embodiment, the first spacer 40A is arranged between the first sealing plate 20A and the electrode body 30. In addition, a second spacer 40B is arranged between the second sealing plate 20B and the electrode body 30. By doing this, it is possible to inhibit an electrical continuity between the electrode body 30 and the sealing plate 20. In addition, the spacer 40 is configured to regulate a movement of the electrode body 30 in the first direction X. By doing this, it is possible to inhibit a breakage of the electrode body 30 (for example, the electrode tab 30t). Incidentally, as a material of the spacer 40, it is possible without particular restriction to use an insulating property resin (a polyamide resin, or the like) capable of being used for the general secondary battery.

Below, a detailed structure of the first spacer 40A will be explained. As shown in FIG. 4 and FIG. 6, the first spacer 40A (the spacer 40) includes a pair of first wall parts 41, a pair of second wall parts 42, and the partition part 43. The first wall parts 41 are portions being respectively along at least parts of the pair of first side surfaces 14a, 14b of the case main body 10. In particular, the first wall parts 41 are formed at the both end parts of the first spacer 40A in the third direction Z. As shown in FIG. 4, the first wall parts 41 are erectly provided toward one X1 in the first direction X so as to be respectively along parts (end parts at the one X1 side) of the first side surfaces 14a, 14b in the first direction X. In addition, as the illustration is omitted, the first wall parts 41 are configured to extend continuously so as to be respectively along the whole areas of the first side surfaces 14a, 14b in the second direction Y shown by FIG. 1.

Then, the second wall parts 42 are portions being respectively along at least parts of the pair of second side surfaces 16a, 16b of the case main body 10. In particular, as shown by FIG. 6, the second wall parts 42 are formed at the both end parts in the second direction Y of the first spacer 40A. Then, the second wall parts 42 are erectly provided toward one X1 in the first direction X so as to be respectively along parts (end parts at the one X1 side) of the second side surfaces 16a, 16b of the case main body 10 in the first direction X. In addition, the second wall parts 42 at one Y1 side in the second direction Y are configured to continuously extend along the third direction Z. On the other hand, a pass through space 49 for making the inside electrically conductive member A1 pass through is formed on the first spacer 40A in accordance with the present embodiment. Therefore, the second wall part 42 at the other Y2 side in the second direction Y has an area containing the central part in the third direction Z, and the area is interrupted.

As shown in FIG. 4, the partition part 43 is a plate-shaped member that is configured to extend along the opposed direction (the third direction Z) of the pair of first side surfaces 14a, 14b so as to be disposed between the electrode body 30 and the sealing plate 20. This partition part 43 is supported by the first wall parts 41 and the second wall parts 42. In particular, both ends of the partition part 43 in the third direction Z are connected to lower ends of the first wall parts 41. In addition, both ends of the partition part 43 in the second direction Y are connected to lower ends of the second wall parts 42. In addition, as described above, the pass through space 49 is formed in this first spacer 40A. Thus, the partition part 43 is divided at the area containing the central part in the third direction Z. In an explanation described below, the partition part 43 at one Z1 in the third direction Z is referred to as "first partition part 43a", and the partition part 43 at the other one Z2 is referred to as "second partition part 43b". Then, this first partition part 43a and this second partition part 43b are bridged by the second wall part 42 at one Y1 side in the second direction Y and the liquid flow path 48.

In addition, the first spacer 40A according to the present embodiment includes plural openings 43c that are configured to penetrate the partition part 43. As shown in FIG. 6, these openings 43c are formed on both of the first partition part 43a and the second partition part 43b. A part of the electrolytic solution injected into the battery case 70 falls through this opening 43c to a downward in the gravity direction (the other X2 in the first direction X). By doing this, it becomes easy to supply the electrolytic solution uniformly to the electrode body 30.

Here, as shown in FIG. 4, regarding the secondary battery 1 in accordance with the present embodiment, the liquid injection hole 22 of the sealing plate 20 and the partition part 43 of the first spacer 40A are configured to be opposed to each other while a constant space is kept between them. Then, on this partition part 43, a diffusion member 44 is formed that is to diffuse the electrolytic solution, injected from the liquid injection hole 22, along the partition part 43. By doing this, it is possible to shorten the time for osmosing the electrolytic solution uniformly to the inside of the electrode body 30. **In** particular, as shown by an arrow E in FIG. 4, the electrolytic solution injected from the liquid injection hole 22 falls to the downward in the gravity direction (the other X2 in the first direction X), so as to come into contact with the diffusion member 44. Then, a flow of the electrolytic solution is changed to be along the partition part 43 by the diffusion member 44. Here, the partition part 43 is configured to extend along the opposed direction of the first side surfaces 14a, 14b (in other words, the third direction Z). Thus, by making the electrolytic solution diffuse along the partition part 43, it is possible to supply the electrolytic solution to a wide range along the opposed direction (the third direction Z) of the case main body 10, and therefore it is possible to shorten the time for making the electrolytic solution osmose uniformly to the inside of the electrode body 30.

Additionally, the diffusion member 44 in the present embodiment includes a third wall part 44a and an inclined surface 44b. The third wall part 44a is a plate-shaped member that is erectly provided from the partition part 43 toward the liquid injection hole 22. Then, the inclined surface 44b is inclined downward from a top end part 44a1 of the third wall part 44a toward the partition part 43. Further particularly, the diffusion member 44 of the present embodiment is a cross section vertical triangle member that includes an inclined surface 44b inclined downward toward the far first side surface 14b from the liquid injection hole 22 (in other words, toward the other one Z2 in the third direction Z). According to the diffusion member 44 described above, it is possible to suitably diffuse the electrolytic solution to a position far from the liquid injection hole 22. Incidentally, it is preferable that an inclination angle of the inclined surface 44b is 10° to 60° (more suitably 20° to 50°, or in particular suitably 40° to 50°). By doing this, it is possible to further efficiently diffuse the electrolytic solution toward the first side surface 14b. Incidentally, the inclination angle herein represents an acute angle that is defined by the partition part 43 and the inclined surface 44b. In addition, it is preferable that the diffusion member 44 is provided to make the inclined surface 44b and the liquid injection hole 22 be opposed to each other. By doing this, it is possible to make the electrolytic solution falling down from the liquid injection hole 22 properly come into contact with the inclined surface 44b.

In addition, as shown by FIG. 6, the diffusion member 44 is configured to extend from one of the pair of second wall parts 42 toward the other one of the pair of second wall parts. In other words, the diffusion member 44 is formed continuously along the second direction Y so as to be opposed to the first wall part 41. By doing this, it is possible to further efficiently diffuse the electrolytic solution.

In addition, as described above, the secondary battery 1 in accordance with the present embodiment includes the inside electrically conductive member A1 (the positive electrode inside terminal 54 and the electrode tabs 30t) that is configured to form the electrically conductive pathway reaching from the electrode body 30 inside the battery case 70 to an outside terminal (the positive electrode outside terminal 52) outside the battery case 70 (see FIG. 4). At that time, in the first spacer 40A, the pass through space 49 through which the inside electrically conductive member A1 passes is formed. By doing this, it is possible to easily form the electrically conductive pathway reaching from the electrode body 30 to the positive electrode outside terminal 52, even in a case where the first spacer 40A is disposed between the first sealing plate 20A and the electrode body 30. Incidentally, as shown by FIG. 6, the pass through space 49 in the present embodiment is a notch that is formed at the partition part 43 and one of the second wall parts 42 (the other Y2 side in the second direction Y). **In** other words, regarding the partition part 43 and one of the second wall parts 42, an area containing a central part in the third direction Z is divided by the pass through space 49. With the first spacer 40A having the configuration described above, a part of the electrolytic solution tends to easily fall to the downward in the gravity direction (the other X2 in the first direction X) through the pass through space 49. By doing this, it becomes easy to supply the electrolytic solution to the electrode body 30.

As described above, regarding the first spacer 40A in the present embodiment, the pass through space 49 is formed on the area containing the central part in the third direction Z. With respect to this, the diffusion member 44 is configured to make the electrolytic solution injected through the liquid injection hole 22 be diffused toward the pass through space 49. In particular, the diffusion member 44 includes the inclined surface 44b that is inclined downwardly toward the pass through space 49. By doing this, it is possible to efficiently supply the electrolytic solution to the electrode body 30 through the pass through space 49.

In addition, the first spacer 40A of the present embodiment includes the liquid flow path 48 that is configured to bridge the partition parts 43 (the first partition part 43a and the second partition part 43b) sandwiching the pass through space 49 so as to be opposed to each other. This liquid flow path 48 is a rod-shaped member that is configured to extend along the second wall part 42 in the third direction Z. An end part 48a of this liquid flow path 48 at one Z1 in the third direction Z is connected to the first partition part 43a. In addition, an end part 48b of the liquid flow path 48 at the other one Z2 in the third direction Z is connected to the second partition part 43b. The first spacer 40A having the configuration described above can further efficiently diffuse the electrolytic solution to the whole area in the third direction Z. In particular, as shown by FIG. 4, the electrolytic solution injected from the liquid injection hole 22 falls onto the first partition part 43a. At that time, a part of the electrolytic solution falls from the opening 43c of the first partition part 43a. By doing this, it is possible to supply the electrolytic solution to the end part at one Z1 in the third direction Z. In addition, a part of the electrolytic solution is diffused to the other one Z2 in the third direction Z by the diffusion member 44. Then, a part of the diffused electrolytic solution falls from the pass through space 49. By doing this, it is possible to supply the electrolytic solution to the central part in the third direction Z. Then, the remained electrolytic solution moves along the liquid flow path 48, reaches to the second partition part 43b, and then falls from the opening 43c of this second partition part 43b. By doing this, it is possible to supply the electrolytic solution to the end part at the other one Z2 in the third direction Z. As described above, the first spacer 40A in the present embodiment includes the liquid flow path 48, and thus it is possible to further efficiently diffuse the electrolytic solution over the whole area in the third direction Z.

Further, in the first spacer 40A of the present embodiment, as shown by FIG. 4, a fourth wall part 46 is erectly provided toward the first sealing plate 20A (in other words, the one X1 in the first direction X) at an end part 43a1 of the first partition part 43a adjacent to the pass through space 49. In accordance with such a configuration, it is possible to inhibit a large portion of the electrolytic solution, diffused to the other one Z2 in the third direction Z by the diffusion member 44, from falling through the pass through space 49. By doing this, an amount of the electrolytic solution supplied to the second partition part 43b through the liquid flow path 48 is increased, and thus it becomes easy to diffuse a sufficient amount of the electrolytic solution to the end part at the other one Z2 side in the third direction Z. In addition, as shown by FIG. 6, it is preferable that the liquid flow path 48 includes no wall part at a side edge part adjacent to the pass through space 49. By doing this, a part of the electrolytic solution flowing in the liquid flow path 48 falls, and thus it is possible to further uniformly diffuse the electrolytic solution.

Above, the first spacer 40A in the present embodiment has been explained. The first spacer 40A having the configuration described above includes the partition part 43 configured to extend in the third direction Z, and includes the diffusion member 44 configured to diffusion the electrolytic solution along this partition part 43. By doing this, it is possible to supply the electrolytic solution to a wide range along the third direction Z, and thus it becomes easy to uniformly osmose the electrolytic solution to the inside of the electrode body 30. Incidentally, regarding the secondary battery 1 in accordance with the present embodiment, the spacer 40 (the second spacer 40B) is arranged at the other X2 in the first direction X, too. This second spacer 40B has a structure approximately the same as the first spacer 40A, and thus a detailed explanation of the structure is omitted.

### <Another embodiment>

Above, the first embodiment of the herein disclosed technique has been explained. Incidentally, in the herein disclosed secondary battery, it is enough that the diffusion member configured to diffuse the electrolytic solution along the partition part is formed on the spacer. The other configurations are not restricted to the above described first embodiment. Below, another embodiment of the herein disclosed technique will be described.

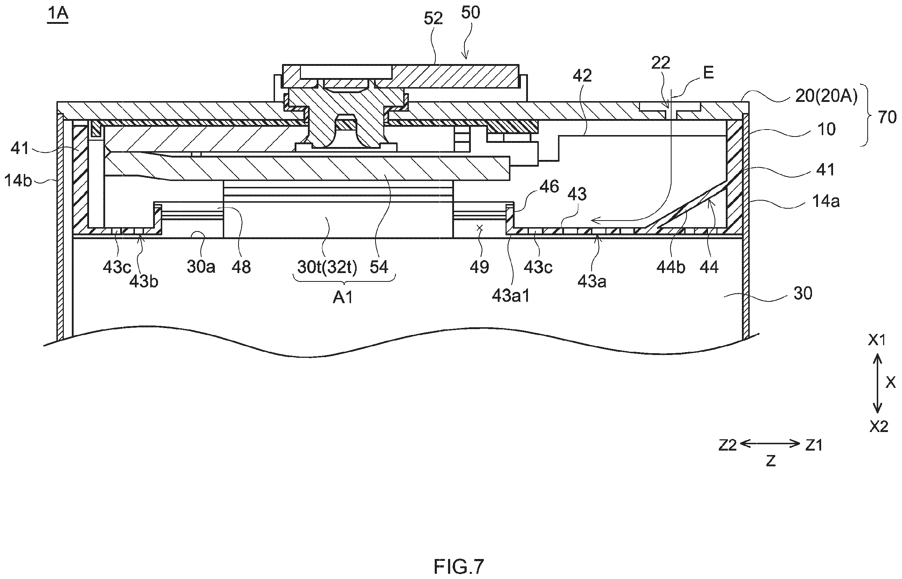

For example, the diffusion member 44 of the secondary battery 1 in accordance with the first embodiment includes the third wall part 44a and the inclined surface 44b. However, it is enough for the diffusion member to be able to diffuse the electrolytic solution along the opposed direction, and the diffusion member is not restricted to the shape of the first embodiment. For example, the diffusion member 44 of a secondary battery 1A shown in FIG. 7 includes an inclined surface 44b that is downwardly inclined from the first wall part 41 toward the partition part 43. Even in a case where the diffusion member 44 including no third wall part is used as described above, it is possible to diffuse the electrolytic solution along the opposed direction (the third direction Z).

In addition, as shown by FIG. 6, the diffusion member 44 of the first embodiment is formed to be continuous along the second direction Y so as to be opposed to the first wall part 41. However, a length of the diffusion member 44 in the second direction Y is not particularly restricted. For example, the diffusion member might be formed at a site directly below the liquid injection hole. Even with the diffusion member having the configuration described above, it is possible to sufficiently diffuse the injected electrolytic solution.

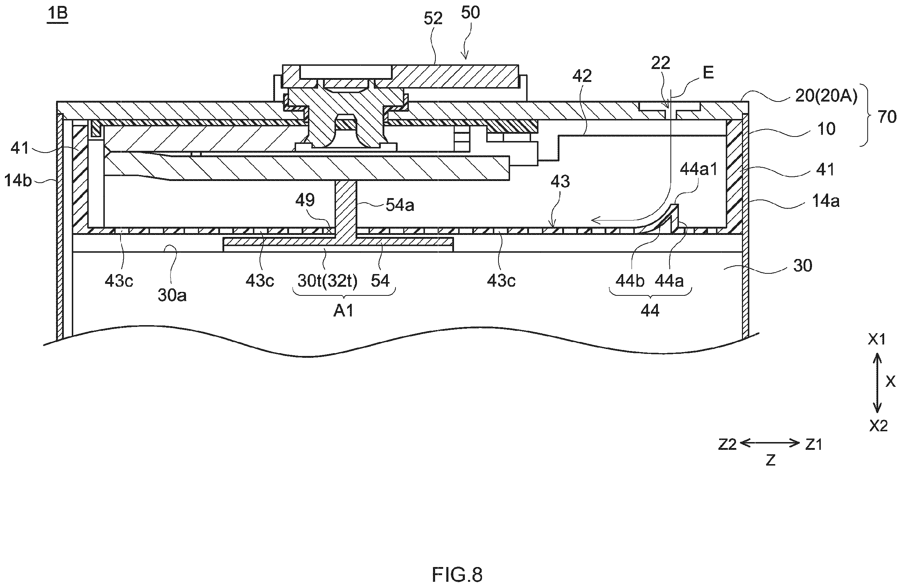

In addition, the pass through space 49 of the spacer 40 of the first embodiment is the notch that is formed on the partition part 43. However, it is enough for the spacer to include a space configured to make the inside electrically conductive member (the inside terminal or the electrode tab) pass through, and thus it is not restricted to the notch-shaped pass through space as shown in the first embodiment. For example, in a secondary battery 1B shown by FIG. 8, the positive electrode inside terminal 54 is used that includes a thin rod shape part 54a configured to extend along the first direction X. In a case where the configuration described above is used, a microscopic opening part into which the rod shape part 54a of the positive electrode inside terminal 54 can be inserted might be formed as the pass through space 49. In a case where the configuration described above is used, the positive electrode inside terminal 54 and the electrode tab 30t are connected at the downward more than the spacer 40. Additionally, in a case where the pass through space 49 is the microscopic opening part, the partition part 43 is not divided, and thus it is possible to easily diffuse the electrolytic solution to the whole area in the third direction Z even if the liquid flow path 48 of FIG. 6 is not formed.

**In** addition, on the spacer 40 of the first embodiment, the liquid flow path 48 is formed that is configured to bridge the first partition part 43a and the second partition part 43b. However, the liquid flow path is not an essential element of the herein disclosed secondary battery. For example, as shown by FIG. 8, in a case where the pass through space 49 is the microscopic opening part, the partition part 43 is not divided and therefore it is possible to easily diffuse the electrolytic solution to the whole area in the third direction Z even if the liquid flow path 48 as shown in FIG. 6 is not formed. **In** addition, the first spacer might include no liquid flow path and then the first partition part and the second partition part might be completely divided. It is preferable that the diffusion member of the first spacer having the configuration described above is configured to diffuse the electrolytic solution toward an inner wall (typical, the second side surface) of the case main body. By doing this, it is possible to diffuse the electrolytic solution along the inner wall of the case main body, and thus it is possible to supply the electrolytic solution to the second partition part from the first partition part over the pass through space.

Additionally, regarding the secondary battery 1 in accordance with the first embodiment, a spacer having a structure approximately the same as the first spacer 40A is used as the second spacer 40B. However, the second spacer is not opposed to the liquid injection hole, and does not affect an osmosis efficiency of the electrolytic solution. Thus, it is possible as the second spacer to use the spacer including no diffusion member. **In** addition, the herein disclosed secondary battery might include no second spacer if the electrical continuity of the sealing plate and the electrode body can be suppressed. For example, if an insulation film is attached to the inner wall of the second sealing plate, the electrical continuity of the sealing plate and the electrode body can be suppressed without using the second spacer.

Above, detailed descriptions for a specific example of the herein disclosed technique have been given, but these are merely illustrations, and thus are not to restrict the scope of claims. The technique recited in claims contains matters in which the above-illustrated specific example is variously deformed or changed.

Incidentally, the technique disclosed herein includes below described items 1 to 11. The below described items 1 to 11 are not restricted to the above described embodiment.

### <Item 1>

A nonaqueous electrolytic solution secondary battery 1, comprising:
a case main body that is a square cylindrical shape having a pair of openings at both ends;
a pair of sealing plates that are configured to cover the pair of openings so as to construct a battery case;
an electrode body that is accommodated at an inside of the battery case;
an electrolytic solution that is accommodated at the inside of the battery case; and
a spacer that is arranged in at least one of spaces between the sealing plate and the electrode body, wherein
the case main body comprises:
   a pair of first side surfaces that are rectangular plate-shaped portions being opposed mutually; and
   a pair of second side surfaces that are configured to respectively extend from an edge of one of the first side surfaces to an edge of the other one of the first side surfaces and that are rectangular plate-shaped portions being opposed mutually,
at least one of the pair of sealing plates comprises:
   a liquid injection hole that is configured to penetrate the sealing plate; and
   a sealing plug that is configured to seal the liquid injection hole,
the spacer comprises:
   a pair of first wall parts that are respectively along at least a part of the pair of first side surfaces of the case main body;
   a pair of second wall parts that are respectively along at least a part of the pair of second side surfaces of the case main body; and
a partition part that is a plate-shaped member configured to extend along an opposed direction of the pair of first side surfaces so as to be disposed between the electrode body and the sealing plate and that is supported by the first wall parts and the second wall parts,
the liquid injection hole and the partition part are spaced away by a constant space so as to be opposed to each other, and a diffusion member configured to diffuse the electrolytic solution, injected from the liquid injection hole, along the partition part is provided on the partition part.

### <Item 2>

The nonaqueous electrolytic solution secondary battery recited in Item 1, wherein
the diffusion member comprises:
a third wall part that is erectly provided from the partition part toward the liquid injection hole; and
an inclined surface that is downwardly inclined from a top end part of the third wall part toward the partition part.

### <Item 3>

The nonaqueous electrolytic solution secondary battery recited in Item 2, wherein
the diffusion member is provided to make the inclined surface and the liquid injection hole be opposed to each other.

### <Item 4>

The nonaqueous electrolytic solution secondary battery recited in any one of Items 1 to 3, wherein
the diffusion member is configured to extend from one to the other one of the pair of second wall parts so as to be opposed to the first wall part.

### <Item 5>

The nonaqueous electrolytic solution secondary battery recited in any one of Items 1 to 4, further comprising an inside electrically conductive member that is configured to form an electrically conductive pathway reaching from the electrode body inside the battery case to an outside terminal outside the battery case, wherein
the spacer comprises a pass through space configured to make the inside electrically conductive member pass through.

### <Item 6>

The nonaqueous electrolytic solution secondary battery 1 recited in Item 5, wherein
the pass through space is arranged at an area containing a central part of the spacer in the opposed direction of the pair of first side surfaces,
the liquid injection hole is arranged at one of end parts of the sealing plate in the opposed direction, and
the diffusion member is configured to diffuse the electrolytic solution toward the pass through space.

### <Item 7>

The nonaqueous electrolytic solution secondary battery recited in Item 5 or 6, wherein
the pass through space is a notch that is formed at the partition part and at least one of the pair of second wall parts.

### <Item 8>

The nonaqueous electrolytic solution secondary battery recited in any one of Items 5 to 7, wherein
the spacer comprises a liquid flow path that is configured to bridge the partition parts being opposed through the pass through space.

### <Item 9>

The nonaqueous electrolytic solution secondary battery according to any one of Items 5 to 8, wherein
a fourth wall part erectly provided toward the sealing plate is provided at an end part of the partition part adjacent to the pass through space.

### <Item 10>

The nonaqueous electrolytic solution secondary battery recited in any one of Items 1 to 9, wherein
the electrode body comprises:
   a positive electrode having a sheet shape;
   a negative electrode that is opposed to the positive electrode and having a sheet shape; and
a separator that is disposed between the positive electrode and the negative electrode,
the electrode body is accommodated at the inside of the battery case to make an osmosis area in which a portion between the positive electrode and the negative electrode is exposed to an outside, be opposed to the liquid injection hole.

### <Item 11>

The nonaqueous electrolytic solution secondary battery recited in any one of Items 1 to 10, wherein
the spacer comprises plural openings that are configured to penetrate the partition part.

## Claims

1. A nonaqueous electrolytic solution secondary battery (1), comprising:
a case main body (10) that is a square cylindrical shape having a pair of openings (12) at both ends;
a pair of sealing plates (20) that are configured to cover the pair of openings (12) so as to construct a battery case (70);
an electrode body (30 that is accommodated at an inside of the battery case (70);
an electrolytic solution that is accommodated at the inside of the battery case (70); and
a spacer (40) that is arranged in at least one of spaces between the sealing plate (20) and the electrode body (30), wherein
the case main body (10) comprises:
a pair of first side surfaces (14a, 14b) that are rectangular plate-shaped portions being opposed mutually; and
a pair of second side surfaces (16a, 16b) that are configured to respectively extend from an edge of one of the first side surfaces (14a, 14b) to an edge of the other one of the first side surfaces (14a, 14b) and that are rectangular plate-shaped portions being opposed mutually,
at least one of the pair of sealing plates (20) comprises:
a liquid injection hole (22) that is configured to penetrate the sealing plate (20); and
a sealing plug (24) that is configured to seal the liquid injection hole (22),
the spacer (40) comprises:
a pair of first wall parts (41) that are respectively along at least a part of the pair of first side surfaces (14a, 14b) of the case main body (10);
a pair of second wall parts (42) that are respectively along at least a part of the pair of second side surfaces (16a, 16b) of the case main body (10); and
a partition part (43) that is a plate-shaped member configured to extend along an opposed direction of the pair of first side surfaces (14a, 14b) so as to be disposed between the electrode body (30) and the sealing plate (20) and that is supported by the first wall parts (41) and the second wall parts (42),
the liquid injection hole (22) and the partition part (43) are spaced away by a constant space so as to be opposed to each other, and a diffusion member (44) configured to diffuse the electrolytic solution, injected from the liquid injection hole (22), along the partition part (43) is provided on the partition part (43).

2. The nonaqueous electrolytic solution secondary battery (1) according to claim 1, wherein
the diffusion member (44) comprises:
a third wall part (44a) that is erectly provided from the partition part (43) toward the liquid injection hole (22); and
an inclined surface (44b) that is downwardly inclined from a top end part of the third wall part (44a) toward the partition part (43).

3. The nonaqueous electrolytic solution secondary battery (1) according to claim 2, wherein
the diffusion member (44) is provided to make the inclined surface (44b) and the liquid injection hole (22) be opposed to each other.

4. The nonaqueous electrolytic solution secondary battery (1) according to any one of claims 1 to 3, wherein
the diffusion member (44) is configured to extend from one to the other one of the pair of second wall parts (42) so as to be opposed to the first wall part (41).

5. The nonaqueous electrolytic solution secondary battery (1) according to any one of claims 1 to 4, further comprising an inside electrically conductive member (A1) that is configured to form an electrically conductive pathway reaching from the electrode body inside the battery case (70) to an outside terminal outside the battery case (70), wherein
the spacer (40) comprises a pass through space (49) configured to make the inside electrically conductive member (A1) pass through.

6. The nonaqueous electrolytic solution secondary battery (1) according to claim 5, wherein
the pass through space (49) is arranged at an area containing a central part of the spacer (40) in the opposed direction of the pair of first side surfaces (14a, 14b),
the liquid injection hole (22) is arranged at one of end parts of the sealing plate (20) in the opposed direction, and
the diffusion member (44) is configured to diffuse the electrolytic solution toward the pass through space (49).

7. The nonaqueous electrolytic solution secondary battery (1) according to claim 5 or 6, wherein
the pass through space (49) is a notch that is formed at the partition part (43) and at least one of the pair of second wall parts (42).

8. The nonaqueous electrolytic solution secondary battery (1) according to any one of claims 5 to 7, wherein
the spacer (40) comprises a liquid flow path (48) that is configured to bridge the partition parts (43) being opposed through the pass through space (49).

9. The nonaqueous electrolytic solution secondary battery (1) according to any one of claims 5 to 8, wherein
a fourth wall part (46) erectly provided toward the sealing plate (20) is provided at an end part of the partition part (43) adjacent to the pass through space (49).

10. The nonaqueous electrolytic solution secondary battery (1) according to any one of claims 1 to 9, wherein
the electrode body (30) comprises:
a positive electrode (32) having a sheet shape;
a negative electrode (34) that is opposed to the positive electrode (32) and having a sheet shape; and
a separator (36) that is disposed between the positive electrode (32) and the negative electrode (34),
the electrode body (30) is accommodated at the inside of the battery case (70) to make an osmosis area (30a, 30b), in which a portion between the positive electrode (32) and the negative electrode (34) is exposed to an outside, be opposed to the liquid injection hole (22).

11. The nonaqueous electrolytic solution secondary battery (1) according to any one of claims 1 to 10, wherein
the spacer (40) comprises plural openings (43c) that are configured to penetrate the partition part (43).
